# EUROPÄISCHE PATENTSCHRIFT

(11) **EP 0 852 721 B1**
(45) Veröffentlichungstag und Bekanntmachung des Hinweises auf die Patenterteilung: **03.05.2000**
(21) Anmeldenummer: 96929188.9
(22) Anmeldetag: 13.09.1996
(51) Int. Cl.: G01N 29/10, G01N 29/26

(54) **VERFAHREN UND VORRICHTUNG ZUR ULTRASCHALLPRÜFUNG VON AUF WELLEN AUFGESCHRUMPFTEN SCHEIBENKÖRPERN MIT UNBEKANNTER KONTUR**
PROCESS AND DEVICE FOR THE ULTRASONIC EXAMINATION OF DISK ELEMENTS OF UNKNOWN CONTOURS SHRUNK ONTO SHAFTS
PROCEDE ET DISPOSITIF DE CONTROLE ULTRASONORE DE CORPS DISCOIDES A CONTOUR INCONNU, EMMANCHES PAR FRETTAGE SUR DES ARBRES

(30) Priorität: 29.09.1995 DE 19536447
(43) Veröffentlichungstag der Anmeldung: 15.07.1998
(73) Patentinhaber: SIEMENS AKTIENGESELLSCHAFT, 80333 München (DE)
(72) Erfinder: SCHREINER, Thomas, D-45481 Mülheim an der Ruhr (DE); LOHMANN, Hans-Peter, D-46485 Wesel-Obrighoven (DE)
(86) Internationale Anmeldenummer: DE9601733
(87) Internationale Veröffentlichungsnummer: WO9713144

(56) Entgegenhaltungen:
- EP-B- 0 126 383
- DE-A- 3 715 914
- GB-A- 2 285 129
- US-A- 5 408 884

## Beschreibung

Die Erfindung bezieht sich auf ein Verfahren und eine Vorrichtung zur Ultraschallprüfung eines auf einer Welle aufgeschrumpften Scheibenkörpers, insbesondere der Radscheibe eines Niederdruck-Turbinenläufern.

Spannungskorrosionsrisse können bei einer dynamischen Belastung von rotierenden Teilen, wie z.B. einer Radscheibe auf einem Läufer einer Niederdruck-Turbine, zu fortschreitenden Schäden führen. Es ist daher notwendig, solche Bauteile in vorgegebenen Intervallen auf Spannungskorrosionsrisse hin zu überprüfen. Radscheiben, welche durch axiale oder radiale Stifte gegen Verdrehen gesichert auf einem Läufer angeordnet sind, können aus wirtschaftlichen Gründen nicht dadurch geprüft werden, daß der Läufer zerlegt wird. Es ist daher angeraten, im Bereich der Schrumpfsitze und der angrenzenden Materialbereiche, insbesondere im Bereich der Nabeninnenoberfläche und der axialen Verdrehsicherungen bei Radscheiben, eine Ultraschallprüfung vorzunehmen. Die Geometrie der Radscheibe ist jedoch für eine Ultraschallprüfung mit Ultraschallprüfköpfen in dem nicht zugänglichen Nabeninnenbereich und in der Nähe von Verdrehsicherungen äußerst kompliziert. Die reproduzierbare Durchführung von Ultraschallprüfungen stößt außerdem noch auf weitere Probleme. Als Ankopplungsfläche für die Ultraschall-Prüfköpfe stehen nur die Seitenwangen der Radscheibe zur Verfügung. Häufig ist die Zugänglichkeit zu den Ankoppelflächen an der Radscheibe durch benachbarte Radscheiben eingeschränkt. Ein weiteres Problem besteht darin, daß die Schallwege zu geometriebedingten Reflektoren (z.B. Verdrehsicherung) und zu eventuell vorhandenen, von der Nabenbohrung ausgehenden Rissen identisch sein können.

Zur Lösung dieser Schwierigkeiten ist durch die EP 0 126 383 B1 ein Verfahren zur Ultraschallprüfung von auf Wellen aufgeschrumpften Scheibenkörpern im Bereich der Schrumpfsitze und eine Einrichtung zur Durchführung des Verfahrens vorgeschlagen worden. Nach diesem Vorschlag werden Spezial-Winkelprüfköpfe zusammen mit Meßtastern auf einem dem jeweiligen Seitenwangenabschnitt angepaßten Schablonenblech mit Hilfe einer Prüfkopfhalterung angeordnet. Solche Spezial-Winkelprüfköpfe werden dann mittels eines Manipulatorarms an die Kontur des Abschnittes der betreffenden Seitenwange herangeführt und angekoppelt. Einem bestimmten Teilbereich der Radscheibe ist ein Schablonenblech zugeordnet. Die korrekte Axial- und Radialpositionierung des Schablonenblechs wird durch Meßtaster angezeigt. Mit anderen Worten, auf jedem Schablonenblech sind die Meßtaster, die insbesondere als induktive Meßtaster ausgeführt sind, zur Überwachung der Positionierung der Winkelprüfköpfe und die Prüfköpfe selbst jeweils in ganz bestimmten Positionen und Relationen zueinander angeordnet, so daß die Umsetzung der Einschall- und Schielwinkel der betreffenden Prüfköpfe bei der Ankopplung an eine bestimmte Position einer Radscheibenwange in die für die bestimmten Prüfbereiche erforderlichen Einschallrichtungen sichergestellt wird. Hierdurch bedingt ist für die Prüfung einer Radscheibe eine Vielzahl von Schablonenblechen notwendig. Die Anfertigung solcher Schablonenbleche setzt voraus, daß die Geometrie der Wangen bekannt ist. Die zur Durchführung der Ultraschallprüfung notwendigen Vorarbeiten sind relativ aufwendig, da die Ultraschallprüfung erst nach eingehender, zeitaufwendiger Analyse der Zeichnungen und nach Konstruktion und Fertigung von Manipulationshilfen in Form von Schablonen möglich ist.

In dem Kurzauszug zur japanischen Patentanmeldung JP-A 63-309 852 aus Patents Abstracts of Japan P-854 April 11, 1989, Vol. 13/No. 146 ist ein Verfahren zur Rißerkennung bei einem Körper von im wesentlichen unbekannter flach konvex gekrümmter Kontur beschrieben. Die Kontur wird über eine in drei voneinander unabhängige Richtungen verfahrbare Abtastvorrichtung bestimmt, in einem Speicher abgespeichert sowie aus diesen abgespeicherten Daten eine Regelung eines Antriebsmechanismus eines Manipulators durchgeführt. An die Abtastvorrichtung ist ein Entfernungssensor befestigt. Die in dem Speicher abgelegten Daten dienen in einem Computer der Berechnung der Position einer Prüfsonde, so daß diese im wesentlichen senkrecht zur Oberfläche des Körpers in einer vorgegebenen Entfernung geführt wird. Ein weiteres Verfahren zur Bestimmung der Kontur eines Körpers und zur Erkennung von Rissen in dem Körper ist in der GB 2 266 367 A beschrieben. Dieses Verfahren wird zur Bestimmung einer inneren und äußeren Kontur eines dreidimensionalen Prüfobjektes und zum Auffinden auch tiefliegender Defekte in metallischen Bauteilen, beispielsweise Turbinenschaufeln, Rohrleitungen oder Ventilen durchgeführt. Die Kontur des Prüfobjektes wird mit einem daran angekoppelten Ultraschall-Prüfkopf ermittelt, derart, daß über LED-Sonden die jeweilige Position des Ultraschall-Prüfkopfes erfaßt wird.

Der vorliegenden Erfindung liegt die Aufgabe zugrunde, ein Verfahren und eine Vorrichtung anzugeben, durch die auch ohne vorherige Kenntnis der Scheibenkörpergeometrie eine Ultraschallprüfung durchgeführt werden kann.

Erfindungsgemäß wird diese Aufgabe durch ein Verfahren gemäß Anspruch 1 und eine Vorrichtung gemäß Anspruch 10 gelöst. Vorteilhafte Ausgestaltungen sind in den jeweils abhängigen Ansprüchen angegeben.

Das Verfahren zur Ultraschall-Prüfung eines auf einer Welle aufgeschrumpften Scheibenkörpers im Bereich des Schrumpfsitzes und der angrenzenden Schrumpfeinflußzone sowie das Scheibenvolumen, wobei der Scheibenkörper im Querschnitt vom Schrumpfsitz radial auswärts sich verjüngende Seitenwangen aufweist, umfaßt folgende Schritte:
- die Kontur des Scheibenkörpers wird abgetastet und dadurch seine Geometrie abgeleitet;
- entsprechend einer vorgegebenen Prüftechnik werden prüftechnische Parameter und Prüfpositionen aus der Scheibenkörpergeometrie ermittelt;
- eine geometrische Reflexionsfläche wird bestimmt;
- Ultraschall-Prüfköpfe werden mit den ermittelten prüftechnischen Parametern an die Seitenwangen zum Abfahren der ermittelten Prüfbahnen angekoppelt.

Zur Durchführung des Verfahrens ist nicht von vornherein die Kenntnis der Geometrie des Scheibenkörpers für die Ultraschallprüfung notwendig. Somit können nunmehr Scheibenkörper auch unbekannter Geometrie einer Ultraschallprüfung unterzogen werden, da die Geometrie des Scheibenkörpers zunächst abgetastet wird. Diese Scheibengeometrie wird in Form von Koordinatenpaaren oder -trippeln in einem Bezugssystems gespeichert. Aus der gespeicherten Geometrie werden in Abhängigkeit von der vorgegebenen Prüftechnik prüftechnische Parameter und die erforderlichen Prüfpositionen ermittelt.

Bei der Überprüfung der Nabeninnenoberfläche der Radscheibe werden vorzugsweise diskrete Prüfpositionen ermittelt, derart daß von diesen Prüfpositionen aus die gesamte Nabeninnenoberfläche in axialer Richtung überdeckt wird. Durch die weitgehende Rotationssymmetrie der Radscheibe wird durch Rotation der Welle die Nabeninnenoberfläche auch in Umfangsrichtung vollständig einer Überprüfung zugänglich.

Bevorzugt wird ein Verfahren, bei dem der Scheibenkörper berührungslos abgetastet wird. Hierzu kann der Scheibenkörper mittels Lichtstrahlen, insbesondere Laserstrahlen, abgetastet werden.

Dadurch, daß zur Abtastung des Scheibenkörpers und der damit verbundenen Erfassung der Geometrie dasselbe Manipulationssystem wie für die Handhabung der Ultraschallprüfköpfe benutzt wird, bedarf es keiner zusätzlichen Manipulationshilfen, wie z.B. Positionierungsbleche mehr. Zusätzlich entfallen die Hilfsmessungen durch Meßtaster beim Ankoppeln der Prüfköpfe, da sämtliche Positionierungsdaten elektrisch aufbereitet sind und zur direkten Steuerung des Manipulators verwendet werden.

Es ist nunmehr auch möglich, zum Beispiel Radscheiben einer Turbinenwelle, insbesondere einer Niederdruck-Dampf turbinenwelle, zu prüfen, ohne daß diese aus dem Gehäuse ausgebaut und in einer Dreheinheit gelagert werden muß. Es ist möglich, nach dem Entfernen einer Gehäusehälfte die Prüfung der Scheibenkörper von der Trennfuge des Gehäuses aus durchzuführen.

Hierzu weist eine entsprechende Vorrichtung zur Durchführung des Verfahrens einen entsprechend langen und mechanisch befestigten Manipulatorarm auf, durch den die Prüfköpfe in die Spalte zwischen benachbarte Radscheiben und den sich in radialer Richtung anschließenden Turbinenschaufeln führbar ist.

Zur Ultraschallprüfung von auf einer Welle aufgeschrumpften Scheibenkörpern im Bereich des Schrumpfsitzes, der angrenzenden Schrumpfeinflußzone und des Scheibenvolumens wird eine Vorrichtung vorgeschlagen, welche eine Geometrie-Erkennungseinrichtung aufweist, die mit einer Steuereinrichtung eines Handhabungsarmes in Verbindung steht, insbesondere durch elektrische Leitungen. Bei dem Handhabungsarm handelt es sich vorzugsweise um einen Arm eines Roboters, der wenigstens drei Freiheitsgrade aufweist. Die Geometrie-Erkennungseinheit weist vorzugsweise mindestens einen am Handhabungsarm angeordneten Sensor auf, der mit einer Auswerteeinrichung elektrisch gekoppelt ist. Der Sensor tastet die Geometrie des Scheibenkörpers ab. Die hieraus generierten Signale werden in der Auswerteeinrichtung verarbeitet und daraus die Scheibengeometrie ermittelt. Bevorzugt handelt es sich bei der Auswerteeinrichtung um eine elektronische Datenverarbeitungseinheit (einen Computer). Die Auswerteeinheit dient auch zur Ansteuerung der Steuereinrichtung des Handhabungsarmes. In der Auswerteeinrichtung können entsprechende Prüfpositionen ermittelt werden und deren Koordinaten an die Steuereinrichtung in Form von elektrischen Signalen übermittelt werden. Die Steuereinrichtung setzt die elektrischen Signale in Steuersignale um, die z.B. elektrische Motoren, mit denen der Handhabungsarm verbunden ist, ansteuern, um den Handhabungsarm mit dem Prüfkopf zu den entsprechenden Positionen zu verlagern. Zur Kontrolle der Positionen kann die Datenerfassungseinrichtung mit genutzt werden, so daß bei einer etwaigen Abweichung ein Fehlsignal ausgelöst wird, durch welches eine Korrektur der Bewegung des Handhabungsarmes eingeleitet wird. Man erhält hierdurch eine Soll-Ist-Wertkontrolle.

Aus der Geometrie des Scheibenkörpers können auch alle notwendigen Prüfparameter, nämlich Prüfkopfposition, Einschallwinkel und Schielwinkel ermittelt werden. Das Meßprinzip entspricht dabei z.B. dem in der EP 0 126 383 B1 beschriebenen, wobei insbesondere Abtastungen unter den Winkeln 0°, 45° und 90° erfolgen. Zur Prüfung können auch zwei Prüfköpfe, von den jeweils einer an eine Seitenwange einer Radscheibe anordenbar ist, nach dem Scherverfahren eingesetzt werden.

Besonders günstig und zeitsparend ist es, wenn für verschiedene Einschallwinkel nicht unterschiedliche Prüfköpfe eingesetzt werden, sondern ein Gruppenstrahler-Prüfkopf, dessen Einschallwinkel einstellbar ist. Die Realisierung des erforderlichen Schielwinkels erfolgt durch Verdrehung des Prüfkopfes mittels verdrehbarem Manipulatorarm. Durch diese Maßnahme wird die Flexibilität und Anpaßbarkeit des Prüfsystems vergrößert.

Weitere Vorteile und Merkmale des Verfahrens und der Vorrichtung werden anhand eines in der Zeichnung dargestellten bevorzugten Ausführungsbeispiels erläutert. Es zeigen:
- Figur 1: perspektivisch zwei Handhabungsarme mit Ultraschallprüfköpfen und Sensoren, die an die Wangen einer Radscheibe positioniert sind,
- Figur 2: schematisch den Aufbau einer Vorrichtung zur Ultraschallprüfung und
- Figur 3: einen Längsschnitt durch eine Radscheibe.

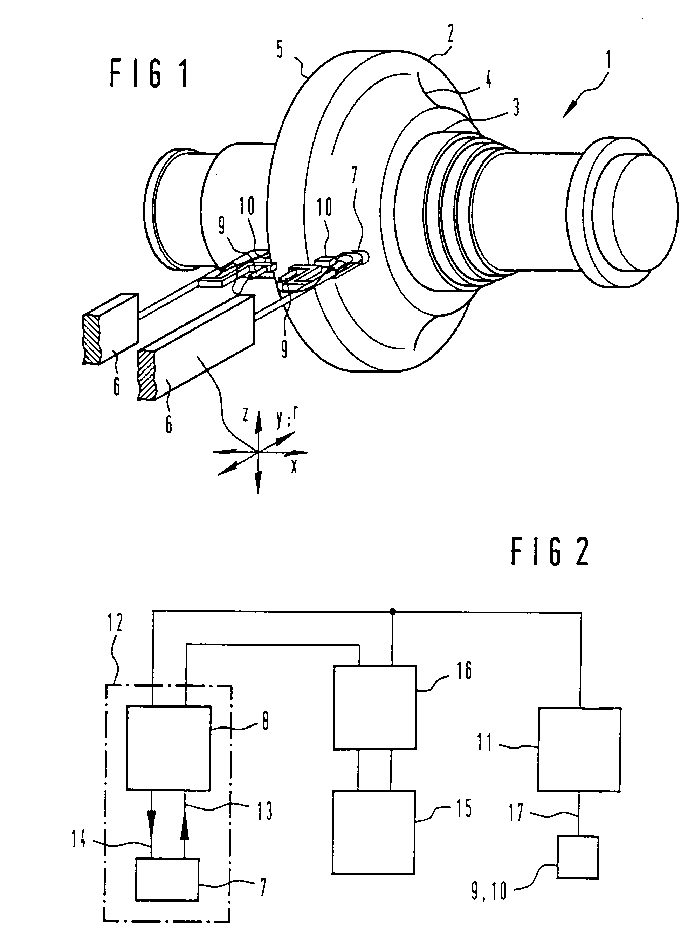

In Figur 1 ist perspektivisch eine Welle 1 dargestellt, auf der ein Scheibenkörper 2 angeordnet ist. Der Scheibenkörper 2 ist auf der Welle 1 aufgeschrumpft. Der Scheibenkörper 2 weist im Querschnitt vom Schrumpfsitz 3 radial auswärts sich verjüngende Seitenwangen 4, 5 auf. Zur Erfassung der Scheibenkörpergeometrie sind zwei Handhabungsarme 6 vorgesehen, deren jeder mindestens so viele, insbesondere vier, Freiheitsgrade aufweist, daß die Ultraschallprüfköpfe an allen für die Prüfung benötigten Stellen der Radscheibenoberfläche angekoppelt und manipuliert werden können. Jeder Handhabungsarm 6 ist in Richtung der Koordinaten x, y und z sowie um seine eigene Achse verdrehbar. Im vorderen Bereich eines jeden Handhabungsarmes 6 ist jeweils ein Sensor 7 positioniert, der den Scheibenkörper 2 entsprechend einem vorgegebenen Bewegungsablauf des Handhabungsarmes 6 abtastet.

Aus den abgetasteten Punkten oder Bereichen des Scheibenkörpers 2 wird nach Figur 2 in der Auswerteeinrichtung 8 die Geometrie des Scheibenkörpers 2 bestimmt.

Zur Ultraschallprüfung des aufgeschrumpften Scheibenkörpers 2 sind zwei Ultraschallprüfköpfe 9, 10 im vorderen Bereich jedes Handhabungsarmes 6 angeordnet. Die Ultraschallprüfköpfe 9, 10, vorzugsweise Gruppenstrahler-Prüfköpfe, sind mit einer Datenerfassungseinrichtung 11 verbunden.

Der Sensor 7 bildet zusammen mit der Auswerteeinrichtung 8 eine Geometrie-Erkennungseinrichtung 12. Die Auswerteeinrichtung 8 ist mit dem Sensor 7 mittels elektrischer Leitungen 13, 14 gekoppelt. Die Geometriedaten des Scheibenkörpers 2 werden für die Ultraschallprüfung an eine Steuereinrichtung 16 übermittelt, welche ein Handhabungsgerät 15 mit einem Handhabungsarm 6 ansteuert. Die von den Ultraschall-Prüfköpfen 9/10 ausgehenden Signale werden über eine Leitung 17 zu der Datenerfassungseinrichtung 11 weitergeleitet. Die Datenerfassungseinrichtung 11 ist auch mit der Auswerteeinrichtung 8 der Geometrie-Erkennungseinrichtung 12 gekoppelt. Hierdurch wird zu dem ermittelten Ultraschallbild die zugehörige Prüfbahn unmittelbar an die Datenerfassungseinrichtung 11 übermittelt.

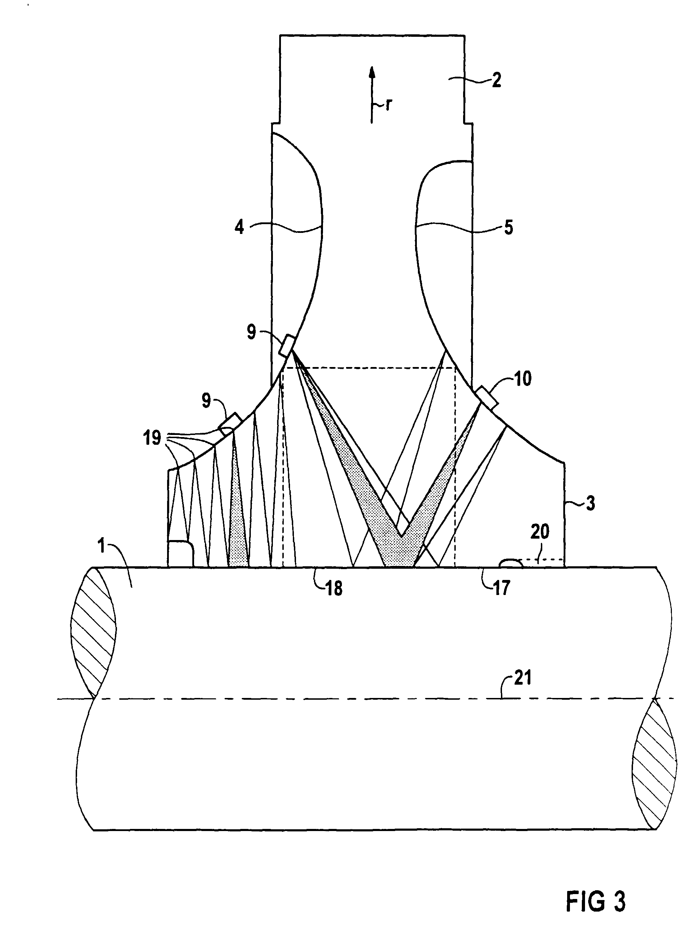

Figur 3 zeigt einen Längsschnitt in Richtung der Wellenachse 21 der Welle 1 einer Radscheibe 2. Die Radscheibe 2 hat sich in radialer Richtung r verjüngende konkav verlaufende Seitenwangen 4, 5. Die Radscheibe 2 liegt mit der axial gerichteten Nabeninnenoberfläche 18 als Schrumpfsitz auf der Welle 1 fest aufgeschrumpft auf. Die Nabeninnenoberfläche 18 bildet eine geometrische Reflexionsfläche 17, deren Lage durch einen oder mehrere Prüfköpfe 9, 10 bestimmt wird. Zur Untersuchung der Nabeninnenoberfläche 18 auf Risse werden ausgehend von der insbesondere über berührungslose Abtaster ermittelten Kontur der Seitenwangen 4, 5 an den Seitenwangen 4, 5 diskrete Positionen 19 für die Prüfköpfe 9, 10 bestimmt. Anhand der Position und Ausrichtung der Prüfköpfe 9, 10 ist in axialer Richtung die gesamte Nabeninnenoberfläche 18 durch Ultraschallsignale vollständig abdeckbar und somit überprüfbar. Durch eine entsprechende Positionierung der Ultraschall-Prüfköpfe 9, 10 sind ebenfalls gezielt Raumbereiche innerhalb des Volumens der Radscheibe 2 mittels Ultraschall auf Fehlstellen, insbesondere Risse, untersuchbar. Die Radscheibe 2 weist Verdrehsicherungen 20 auf. In radialer Richtung, gekennzeichnet durch den Pfeil r, schließen sich nicht dargestellte Turbinenschaufeln an. Bei Niederdruck-Turbinenschaufeln kann die Ausdehnung eines Spaltes zwischen benachbarter Radscheiben 2 und den in radialer Richtung darauf angeordneten Turbinenschaufeln bis über einen Meter betragen.

Die Erfindung erlaubt die zeitsparende Ultraschallprüfung von Turbinen-Radscheiben, ohne daß deren Geometrie vor der Prüfung bekannt sein muß. Die Prüfung kann ohne Ausbau der Turbinenwelle z.B. von der Trennfuge aus durchgeführt werden.

## Patentansprüche

1. Verfahren zur Ultraschall-Prüfung eines Scheibenkörpers (2), welches an einem auf einer Welle (1) aufgeschrumpften Scheibenkörper (2) im Bereich des Schrumpfsitzes (3) und der angrenzenden Schrumpfeinflußzone durchgeführt wird, wobei der Scheibenkörper (2) im Querschnitt vom Schrumpfsitz (3) radial auswärts sich verjüngende Seitenwangen (4, 5) aufweist, mit folgenden Schritten:
- die Kontur des Scheibenkörpers (2) wird abgetastet,
- eine geometrische Reflexionsfläche (17), an der mit dem Auftreten von Defekten zu rechnen ist, wird bestimmt,
- die Geometrie wird aus den Ergebnissen des Abtastens der Kontur und der Bestimmung der Reflexionsfläche (17) abgeleitet,
- entsprechend einer vorgegebenen Prüftechnik werden unter Berücksichtigung der Geometrie des Scheibenkörpers (2) prüftechnische Parameter und Prüfpositionen für Ultraschallprüfköpfe (9, 10) ermittelt und
- Ultraschall-Prüfköpfe (9, 10) werden mit den ermittelten prüftechnischen Parametern an die Seitenwangen (4, 5) zum Abfahren der ermittelten Prüfpositionen angekoppelt.

2. Verfahren nach Anspruch 1, bei dem eine Anzahl diskreter Prüfpositionen (19) ermittelt wird, durch die eine vollständige Überprüfung der Nabeninnenoberfläche (18) des Scheibenkörpers (2) in wellenparalleler Richtung durch die Ultraschallköpfe (9, 10) gegeben ist.

3. Verfahren nach Anspruch 1 oder 2, bei dem der Scheibenkörper (2) berührungslos abgetastet wird.

4. Verfahren nach Anspruch 3, bei dem der Scheibenkörper (2) mittels Lichtstrahlen, insbesondere Laserstrahlen, abgetastet wird.

5. Verfahren nach einem der Ansprüche 1 bis 4, bei dem die Prüfkopfposition als einer der prüftechnischen Parameter aus den Geometriedaten und Vorgaben ermittelt wird.

6. Verfahren nach einem der Ansprüche 1 bis 5, bei dem der Einschallwinkel als einer der prüftechnischen Parameter aus den Geometriedaten und Vorgaben ermittelt wird.

7. Verfahren nach einem der Ansprüche 1 bis 6, bei dem der Schielwinkel als einer der prüftechnischen Parameter aus den Geometriedaten und Vorgaben ermittelt wird.

8. Verfahren nach einem der vorhergehenden Ansprüche, bei dem die Orientierung des Prüfkopfs (9, 10) oder der Prüfköpfe im Hinblick auf die Orientierung eines Risses ein prüftechnischer Parameter ist.

9. Verfahren nach einem der vorhergehenden Ansprüche, bei dem die Scheibenkörpergeometrie (2) in Koordinaten eines vorgegebenen Bezugssystems gespeichert wird.

10. Vorrichtung zur Ultraschall-Prüfung eines auf einer in eine Turbinenanlage eingebauten Welle (1) aufgeschrumpften Scheibenkörpers (2) im Bereich des Schrumpfsitzes (3), der angrenzenden Schrumpfeinflußzonen und des Scheibenkörpervolumens, wobei der Scheibenkörper (2) im Querschnitt vom Schrumpfsitz radial auswärts sich verjüngende Seitenwangen (4, 5) aufweist, mit mindestens einem Ultraschall-Prüfkopf (9, 10), der an einem Handhabungsarm (6) eines wenigstens drei Freiheitsgrade aufweisenden Handhabungsgerätes (15) angeordnet und mit einer Datenerfassungseinrichtung (11) verbunden ist,
**dadurch gekennzeichnet**, daß die Vorrichtung eine Geometrieerkennungseinrichtung (12) aufweist, die mit einer Steuereinrichtung (16) des Handhabungsgerätes (15) in Verbindung steht und wobei durch den langen und mechanisch befestigten Handhabungsarm (6) der Ultraschall-Prüfkopf (9, 10) zwischen benachbarte Scheibenkörper mit sich im radialer Richtung daran anschließende Turbinenschaufeln einführbar ist.

11. Vorrichtung nach Anspruch 10, **dadurch gekennzeichnet**, daß die Geometrieerkennungseinrichtung (12) wenigstens einen am Handhabungsarm angeordneten Sensor (7) aufweist, der mit einer Auswerteeinrichtung (8) elektrisch gekoppelt ist.

12. Vorrichtung nach Anspruch 11, **dadurch gekennzeichnet**, daß die Auswerteeinrichtung (8) und/oder die Steuereinrichtung (16) eine elektronische Datenverarbeitungseinheit umfaßt.

13. Vorrichtung nach Anspruch 10, 11 oder 12, **dadurch gekennzeichnet**, daß ein Gruppenstrahler-Prüfkopf als Ultraschallprüfkopf vorhanden ist, der auf unterschiedliche Einschallwinkel entsprechend der Geometrie des Scheibenkörpers (2) eingestellt werden kann.

## Claims

1. Method for ultrasound testing of a disc body (2), which is carried out on a disc body (2), which is shrunk onto a shaft (1) in the region of the shrink seating (3) and the adjacent shrinkage influence zone, the disc body (2) having side pieces (4, 5) which taper radially outwards from the shrink seating (3) in cross section, having the following steps:
- the contour of the disc body (2) is scanned,
- a geometric reflection surface (17) is determined, on which it is assumed that defects may occur,
- the geometry is derived from the results of the scanning of the contour and the determination of the reflection surface (17),
- test parameters and test positions for ultrasound test heads (9, 10) are determined on the basis of a predetermined test technology and taking account of the geometry of the disc body (2), and
- ultrasound test heads (9, 10) are coupled, using the determined test parameters, to the side pieces (4, 5) in order to cover the determined test positions.

2. Method according to Claim 1, in which a number of discrete test positions (19) are determined which ensure that the ultrasound heads (9, 10) carry out a complete examination of the hub inner surface (18) of the disc body (2) in the direction parallel to the shaft.

3. Method according to Claim 1 or 2, in which the disc body (2) is scanned without touching it.

4. Method according to Claim 3, in which the disc body (2) is scanned by means of light beams, in particular laser beams.

5. Method according to one of Claims 1 to 4, in which the test head position is determined as one of the test parameters from the geometric data and presets.

6. Method according to one of Claims 1 to 5, in which the ensonification angle is determined as one of the test parameters from the geometric data and presets.

7. Method according to one of Claims 1 to 6, in which the squint angle is determined as one of the test parameters from the geometric data and presets.

8. Method according to one of the preceding claims, in which the orientation of the test head (9, 10) or of the test heads is a test parameter with respect to the orientation of a crack.

9. Method according to one of the preceding claims, in which the disc body geometry (2) is stored in coordinates in a predetermined reference system.

10. Apparatus for ultrasound testing of a disc body (2), which is shrunk onto a shaft (1) installed in a turbine system, in the region of the shrink seating (3), of the adjacent shrinkage influence zones and of the disc body volume, the disc body (2) having side pieces (4, 5) which taper radially outwards from the shrink seating in cross section, having at least one ultrasound test head (9, 10) which is arranged on a handling arm (6) of a handling unit (15), and in which case the long and mechanically secured handling arm allows the ultrasound test bed (9, 10) to be inserted between adjacent disc bodies with turbine blades adjacent to it in the radial direction.
characterized in that the device has a geometry identification device (12) which is connected to a control device (16) of the handling unit (15), it being possible to insert the ultrasound test head (9, 10) between adjacent disc bodies with turbine blades that follow it in the radial direction by means of the long and mechanically loaded handling arm (6).

11. Apparatus according to Claim 10, characterized in that the geometry identification device (12) has at least one sensor (7) which is arranged on the handling arm and is electrically coupled to an evaluation device (8).

12. Apparatus according to Claim 11, characterized in that the evaluation device (8) and/or the control device (16) comprises an electronic data processing unit.

13. Apparatus according to Claim 10, 11 or 12, characterized in that the ultrasound test head is a transducer array test head which can be set to different ensonification angles corresponding to the geometry of the disc body (2).

## Revendications

1. Procédé de contrôle ultrasonore d'un corps (2) discoïde, qui est exécuté sur un corps (2) discoïde emmanché par frettage sur un arbre (1) dans la région de l'ajustement (3) fretté et de la zone limitrophe d'influence du frettage, le corps (2) discoïde comportant des joues (4, 5) latérales allant en se rétrécissant, en coupe transversale, radialement vers l'extérieur à partir de l'ajustement (3) fretté, ce procédé comprenant les étapes suivantes :
- on balaye le contour du corps (2) discoïde,
- on détermine une surface (17) réfléchissante géométrique sur laquelle on peut s'attendre à l'apparition de défauts,
- on déduit la géométrie des résultats du balayage du contour et de la détermination de la surface (17) réfléchissante,
- suivant une technique de contrôle prescrite, on détermine, en tenant compte de la géométrie du corps (2) discoïde, des paramètres techniques de contrôle et des positions de contrôle pour des têtes (9, 10) de contrôle ultrasonore, et
- à l'aide des paramètres techniques de contrôle déterminés, on accouple les têtes (9, 10) de contrôle ultrasonore aux joues (4, 5) latérales afin de parcourir les positions de contrôle déterminées.

2. Procédé suivant la revendication 1, suivant lequel on détermine un nombre de positions (19) de contrôle discrètes qui assure un contrôle intégral, par les têtes (9, 10) de contrôle ultrasonore, de la surface (18) intérieure du moyeu du corps (2) discoïde en direction parallèle à l'arbre.

3. Procédé suivant la revendication 1 ou 2, suivant lequel on balaye le corps (2) discoïde sans contact.

4. Procédé suivant la revendication 3, suivant lequel on balaye le corps (2) discoïde au moyen de rayons lumineux, notamment de rayons laser.

5. Procédé suivant l'une des revendications 1 à 4, suivant lequel on détermine la position de la tête de contrôle en tant qu'un des paramètres techniques de contrôle déterminés à partir des données géométriques et des prescriptions.

6. Procédé suivant l'une des revendications 1 à 5, suivant lequel on détermine l'angle d'irradiation acoustique en tant qu'un des paramètres techniques de contrôle déterminés à partir des données géométriques et des prescriptions.

7. Procédé suivant l'une des revendications 1 à 6, suivant lequel on détermine l'angle bigle en tant qu'un des paramètres techniques de contrôle déterminés à partir des données géométriques et des prescriptions.

8. Procédé suivant l'une des revendications précédentes, suivant lequel l'orientation de la tête (9, 10) de contrôle ou des têtes de contrôle est, en considération de l'orientation d'une fissure, un paramètre technique de contrôle.

9. Procédé suivant l'une des revendications précédentes, suivant lequel on mémorise la géométrie du corps (2) discoïde sous forme de coordonnées d'un système prescrit de référence.

10. Dispositif de contrôle ultrasonore, d'un corps (2) discoïde emmanché par frettage sur un arbre (1) monté dans une installation à turbine, dans la région de l'ajustement (3) fretté, des zones limitrophes d'influence du frettage et du volume du corps discoïde, le corps (2) discoïde comportant des joues (4, 5) latérales allant en se rétrécissant, en coupe transversale, radialement vers l'extérieur à partir de l'ajustement fretté, ce dispositif comprenant au moins une tête (9, 10) de contrôle ultrasonore, qui est disposée sur un bras (6) de manipulation d'un appareil (15) de manipulation possédant au moins trois degrés de liberté, et qui est reliée à une unité (11) d'enregistrement de données, **caractérisé** en ce que le dispositif comprend une unité (12) de reconnaissance de géométrie qui est reliée à une unité (16) de commande de l'appareil (15) de manipulation, la tête (9, 10) de contrôle ultrasonore pouvant, au moyen du long bras (6) de manipulation, mécaniquement fixé, être introduite entre des corps discoïdes voisins pourvus d'aubes de turbine s'y raccordant en direction radiale.

11. Dispositif suivant la revendication 10, **caractérisé** en ce que l'unité (12) de reconnaissance de géométrie comporte au moins un détecteur (7), qui est disposé sur le bras de manipulation et qui est électriquement couplé à une unité (8) d'interprétation.

12. Dispositif suivant la revendication 11, **caractérisé** en ce que l'unité (8) d'interprétation et/ou l'unité (16) de commande comprennent une unité électronique de traitement de données.

13. Dispositif suivant la revendication 10, 11 ou 12, **caractérisé** en ce qu'une tête de contrôle à système d'antennes, qui peut être réglée à différents angles d'irradiation acoustique suivant la géométrie du corps (2) discoïde, est prévue comme tête de contrôle ultrasonore.
